Europäisches Patentamt

European Patent Office

Office européen des brevets

(11) Numéro de publication: **0 032 329**
**B1**

(12) **FASCICULE DE BREVET EUROPEEN**

(45) Date de publication du fascicule du brevet: **31.07.85**

(21) Numéro de dépôt: **80401738.2**

(22) Date de dépôt: **05.12.80**

(51) Int. Cl.⁴: **C 03 C 27/12,** B 32 B 17/10, C 08 G 18/10, C 09 J 3/16

(54) **Utilisation d'une couche adhésive dans la fabrication de stratifiés et stratifiés comprenant une telle couche.**

(30) Priorité: **06.12.79 FR 7929968**

(43) Date de publication de la demande:
**22.07.81 Bulletin 81/29**

(45) Mention de la délivrance du brevet:
**31.07.85 Bulletin 85/31**

(84) Etats contractants désignés:
**AT BE CH DE GB IT LI LU NL SE**

(56) Documents cités:
**FR-A-2 000 538**
**FR-A-2 233 375**
**US-A-3 228 820**
**US-A-3 388 032**

(73) Titulaire: **SAINT-GOBAIN VITRAGE**
**Les Miroirs 18, avenue d'Alsace**
**F-92400 Courbevoie (FR)**

(72) Inventeur: **Daude, Gérard**
**11 rue René Voisin**
**F-33140 Villeneuve d'ornon (FR)**
Inventeur: **Girard, Philippe**
**5 rue Saint-Thomas**
**F-27000 Evreux (FR)**

(74) Mandataire: **Eudes, Marcel et al**
**Saint-Gobain Recherche 39 Quai Lucien Lefranc**
**F-93304 Aubervilliers Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## 0 032 329

**Description**

La présente invention concerne la fabrication de stratifiés rigides par assemblage de feuilles de natures diverses. Elle concerne notamment la fabrication de stratifiés en verre et/ou en matière plastique tels des vitrages feuilletés de grandes dimensions comme des vitrages automobiles, de bâtiments et de plus petites dimensions tels les masques, écrans, lunettes, etc. Elle concerne aussi la fabrication de stratifiés contenant des feuilles de nature autre, métallique par exemple. Plus particulièrement, l'invention concerne l'utilisation d'une couche adhésive particulière dans la fabrication de tels stratifiés. Elle concerne encore les stratifiés comprenant cette couche adhésive.

Bien que la description suivante se rattache plus précisément à la fabrication de vitrages feuilletés, elle n'exclut pas la fabrication d'autres stratifiés.

L'utilisation d'une couche de polyuréthane en tant que couche adhésive dans les vitrages feuilletés est connue. Cette couche peut remplir la seule fonction de collage. Elle peut tenir en outre un rôle d'adbsorbeur d'énergie.

Cette couche adhésive peut être utilisée pour assembler des feuilles de substances diverses en verre et/ou en matières plastiques.

Par exemple dans la publication de brevet français 2 398 606, on décrit l'utilisation d'une couche de polyuréthane thermoplastique pour l'adhésion avec un support en verre ou en matière plastique d'une couche de matière plastique autocicatrisable, c'est à dire que, sur une telle couche, les impressions locales disparaissent spontanément après un court laps de temps, de l'ordre de quelques minutes, cette vitesse de disparition étant fonction de la nature de l'impression et de la température de la matière plastique. En même temps, cette couche est antilacérante, c'est-à-dire qu'en cas de bris d'un vitrage en verre, la couche recouvre les arêtes vives du verre et protège la face, les yeux ou d'autres parties du corps des passagers d'un véhicule par exemple, ou encore lorsqu'il s'agit de lunettes de sécurité, la couche de protection peut éviter le contact des arêtes vives avec les yeux.

L'assemblage de la couche de matière plastique autocicatrisable et antilacérante avec le support s'effectue à l'aide de a chaleur et de la pression, par exemple en soumettant le feuilleté à un cycle d'autoclave. La liaison obtenue est une liaison physique lorsque le support est en verre. La force de cette liaison est généralement suffisante mais elle peut cependant varier et de ce fait elle n'est pas totalement maitrisée.

Ceci est particulièrement gênant dans le cas des couches de polyuréthane utilisées comme couches intercalaires jouant le rôle d'absorbeur d'énergie dans des vitrages feuilletés.

Dans des domaines techniques différents de celui des vitrages feuilletés, on connait d'après la publication de brevet français 2 000 538 deux types de tiges susceptibles de réagir entre elles pour former une couche adhésive. La première tige contient des groupes susceptibles de réagir avec les groupes isocyanates initialement bloqués d'une seconde tige après déblocage desdits groupes isocyanates.

On connait également d'après la publication du brevet français 2 233 375 une composition adhésive comprenant un mélange de trois prépolymères dont un est un prépolymère d'uréthane contenant des groupes isocyanates bloqués; les deux autres étant des prépolymères possédant des groupes hydroxyles. En débloquant les groupes isocyanates bloqués ceux-ci vont réagir avec les groupes hydroxyles des deux prépolymères.

On connait aussi d'après la publication de brevet américain 3 228 820 des compositions adhésives contenant un prépolymère d'uréthane ayant des groupes NCO bloqués qui sont utilisées pour la fabrication de stratifiés à base de fibres textiles et de substrat poreux.

L'invention propose l'utilisation d'une couche adhésive transparente pour la fabrication de vitrages feuilletés, cette couche étant susceptible de se lier chimiquement avec les autres éléments du vitrage feuilleté, et elle comprend essentiellement un polyuréthane bloqué contenant des groupes isocyanates masqués par un agent bloquant, le polyuréthane bloqué étant formé à partir d'un composant polyol, d'un composant isocyanate, d'un agent d'allongement de chaines et d'un agent bloquant les fonctions isocyanates en excès, le nombre de groupements équivalents NCO dus au composant isocyanate étant supérieur au nombre de groupements équivalents hydrogène actifs tels les groupements hydroxyles provenant du composant polyol et de l'agent d'allongement de chaines, le polyuréthane bloqué étant susceptible d'être débloqué par action de la chaleur afin que les fonctions isocyanates libérées puissent réagir avec les éléments du vitrage à assembler se trouvant au contact de la couche adhésive, notamment avec le support de celle-ci.

Sous un des aspects de l'invention, la couche adhésive transparente est formée essentiellement d'un polyuréthane bloqué comprenant des groupes isocyanates masqués par un agent bloquant, ce polyuréthane bloqué étant formé à partir d'un composant polyol partiellement réticulé par des agents de réticulation, tels des alcools de fonctionnalité supérieure ou égale à 3, et un composant isocyanate, le rapport numérique des groupes NCO sur celui des groupes OH étant compris entre 1,01 et 3. De préférence, on utilise un assez faible excès de composant isocyanate ce qui a pour avantage de demander une faible quantité d'agent bloquant qui peut d'ailleurs être utilisé en léger défaut: un rapport numérique compris entre 1,01 et 1,5 répond à cela.

En tant que composant isocyanate, on peut utiliser des isocyanates aliphatiques, cycloaliphatiques, aliphatiques-aromatiques non sensibles à la lumière et pouvant contenir des fonctions urée ou encore des

2

biurets d'isocyanates. On peut utiliser par exemple les isocyanates difonctionnels aliphatiques comme le 1,6-hexanediisocyanate, le 2,2,4 - triméthyl - 1,6 - hexanediisocyanate, le 2,4,4 - triméthyl - 1,6 - hexanediisocyanate, le 1,3 - bis(isocyanatométhyl)benzène, le bis - (4 - isocyanatocyclohexyl)méthane, le bis - (3 - méthyl - 4 - isocyanatocyclohexyl)méthane, le 2,2 - bis - (4 - isocyanatocyclohexyl)propane et le 3 - isocyanatométhyl - 3,5,5 - triméthylcyclohexylisocyanate.

En tant que composé polyol pour former le polyuréthane bloqué, on peut utiliser des polyétherdiols ou des polyesterdiols de masse moléculaire comprise entre 450 et 2000 (des masses moléculaires plus importantes peuvent entraîner une diminution des propriétés d'adhésion du polyuréthane), des polycaprolactones de masse moléculaire comprise entre 500 et 2000, des polybutadiènes à fonction hydroxyle ou carboxyle, seuls ou en mélange, des diols courts de masse moléculaire comprise entre 50 et 200, des polyacryliquediols, des polycarbonatediols, et des agents réticulants tels des acools de fonctionnalité supérieure ou égale à 3, de masse moléculaire comprise entre 62 et 3000, ou des amines de masse moléculaire comprise entre 200 et 1000 de fonctionnalité supérieure ou égale à 3. On utilise par exemple des polyols obtenus par réaction d'alcools polyfonctionnels avec des diacides aliphatiques ou des éthers cycliques. Les alcools polyfonctionnels sont par exemple le 1,2 - éthanediol(éthylèneglycol), le 1,2 - propanediol, le 1,3 - propanediol, le 1,2 - butanediol, le 1,4 - butanediol, le 2,2 - diméthyl - 1,3 - propanediol (néopentylglycol), le 1,6 - hexanediol, le 2 - méthyl - 2,4 - pentanediol, le 3 - méthyl - 2,4 - pentanediol, le 2 - éthyl - 1,3 - hexanediol, le 2,2,4 - triméthyl - 1,3 - pentanediol, le diéthylèneglycol, le triéthylèneglycol, les polyéthylèneglcyols, le dipropylèneglycol, le tripropylèneglycol, les polypropylène-glycols ou le 2,2 - bis(hydroxyméthyl) - 1 - 1 - propanol (triméthyloléthane), le 2,2 - bis(hydroxyméthyl) - 1 - butanol (triméthylolpropane), le 1,2,4 - butanetriol, le 1,2,6 - hexanetriol, le 2,2 - bis(hydroxymethyl) - 1,3 - propanediol (pentaérythritol) et le 1,2,3,4,5,6 - hexanehexol (sorbitol), le cyclohexanediméthanol.

Les diacides aliphatiques sont par exemple l'acide malonique, l'acide succinique, l'acide glutarique, l'acide adipique, l'acide subérique, et l'acide sébacique.

Dans les applications aux vitrages feuilletés, généralement, on utilise en tant que composant polyol au moins un polyétherpolyol ou polyesterpolyol formé à partir de plusieurs diols, et d'au moins un agent réticulant, tels: des alcools de fonctionnalité supérieure ou égale à 3, ou des amines de fonctionnalité supérieure ou égale à 3. On obtient ainsi une couche adhésive de bonne qualité optique et présentant notamment après déblocage des fonctions isocyanates masquées, de bonnes propriétés d'adhésion.

Comme agents bloquant pour protéger ou masquer les fonctions isocyanates libres du polyuréthane, on peut utiliser: le phénol, l'ortho, le méta ou le para crésols et leurs mélanges, le xylénol, le résorcinol, l'hydroquinone, le catéchol, le guaîacol, les naphtols, les alkylphénols, tels les butylphénols, l'octylphénol, le nonylphénol, le 2,4-diisobutylphénol et ses dérivés, le 4-hydroxybiphényle, la 6-hydroxytétraline, les bisphénols tels que l'isopropylidène-4,4'-bisphénol, des lactames tels que le lauryllactame, l'ε-caprolactame, des oximes telles que la méthyléthylcétoxyme, l'acétoxime, la cyclohexanoneoxime, l'hydroxylamine, l'acide cyanhydrique, le bisulfite de sodium, le tertiobutanol, le malonate de diétyle, l'acétoacétate d'éthyle, le cyanoacétate d'éthyle, le 2,4-pentanedione, l'acétylacétone, la diphénylamine, la monométhylaniline, les aryl-mercaptans, les alkyl-mercaptans, le 1-phényl-3-méthyl-5-pyrazolone, etc.

Pour fabriquer la couche adhésive transparente, on fabrique des solutions ou dispersions de polyuréthane bloqué. Comme solvant, on peut utiliser des solvants organiques comme des cétones. L'utilisation de solvants organiques présente plusieurs inconvénients. Ces solvants sont chers ce qui augmente le prix de revient de la couche. D'autre par, il faut les éliminer par évaporation et, afin d'éviter de nuire à l'environnement ou encore afin d'éviter des combustions instantanées, on doit utiliser un appareillage supplémentaire. C'est pourquoi on utilise de préférence un polyuréthane dispersable ou soluble dans l'eau.

La mise en solution ou dispersion dans l'eau peut être assurée pour des colles anioniques par l'emploi de diols à fonction acide, pour des colles cationiques par l'emploi de diols comportant un atome d'azote tel le N-méthyldiéthanolamine, le N-phényldiéthanolamine, un dialkylaminoéthylamine. On peut utiliser ces agents de solubilité à raison de 4% à 9% en poids de la solution et de préférence de 4,5% à 7,5% en poids. On fabrique des solutions ou des dispersions fines aqueuses contenant généralement de 10% à 65% d'extrait sec et de préférence de 25% à 50%.

La couche adhésive peut être formée in situ sur un des éléments à assembler. Cette couche adhésive peut encore être coulée en une ou plusieurs fois, sur un support auquel elle n'adhère pas fortement, pour former une feuille que l'on détache dudit support de coulée, et qu'on intercale entre les éléments à assembler.

Lorsque la couche adhésive est utilisée pour l'assemblage de la couche de matière plastique présentant des propriétés d'antilacération et d'autocicatrisation déjà citées avec un support monolithe ou feuilleté, en verre ou en matière plastique, on peut avantageusement fabrique au préalable une feuille à deux couches de la façon suivante.

On fabrique tout d'abord une première couche qui peut être soit la couche adhésive, soit la couche de matière plastique antilacérante et autocicatrisable formée notamment d'un polyuréthane thermodurcissable. Et sur cette première couche, on forme la deuxième couche.

On peut ainsi fabriquer tout d'abord une couche de polyuréthane thermodurcissable par coulée du mélange des composants sur un support de coulée. Après polymérisation des monomères et formation d'une couche thermodurcissable d'épaisseur pouvant varier entre 0,2 et 0,8 mm, on coule la solution ou dispersion aqueuse contenant le polyuréthane bloqué et on évapore l'eau. On peut également procéder de la façon inverse. Les deux couches adhèrent l'une à l'autre; la couche de colle peut avoir une épaisseur comprise entre 0,01 à 1 mm selon l'application désirée par exemple, et pour des épaisseurs importantes dans le cas d'utilisation en tant qu'absorbeur d'énergie par exemple, elle peut être formée de plusieurs couches coulées successives. On sépare la feuille du support de coulée. Cette feuille peut être manipulée et stockée aisément, l'agent bloquant rendant la couche adhésive très peut sensible à l'humidité.

On utilise cette feuille pour fabrique des vitrages de sécurité tels que des vitrages automobiles, notamment des parebrises, des vitrages de bâtiments, des lunettes de protection, etc.

Pour fabrique un vitrage feuilleté, on assemble les éléments dont au moins un est revêtu de la couche adhésive, par utilisation de la pression, par exemple par pinçage des éléments entre les rouleaux d'une calandreuse, et par action de la chaleur. La chaleur provoque à une température déterminée le déblocage des fonctions isocyanates masquées qui peuvent alors réagir avec les éléments à assembler, par exemple avec la feuille rigide formant le support du vitrage et avec la couche thermodurcissable pour créer une liaison chimique.

Le débloquage peut s'effectuer à une température de l'ordre de 110 à 150°C. Cette température peut éventuellement être modifiée à l'aide de catalyseurs de déblocage.

Comme catalyseur de déblocage des fonctions isocyanates masquées, on peut utiliser des sels d'acides organiques mono ou polycarboxyliques et d'amines tertiaires ou de polyamines qui ont au moins un azote tertiaire, des produits de réaction d'amines avec des aldéhydes ou cétones tels l'héxaméthylène-tétramine ou des bases de Schiff.

Comme catalyseur de déblocage, on peut encore utiliser des composés organométalliques et des complexes métalliques à raison de 0,1 à 1% environ du poids total du polyuréthane bloqué. Parmi ceux-ci, les dérivés organostaniques tels les dicarboxylates de dialkylétain, les dihalogénures de dioctylétain, les acétylacétonates métalliques, tel celui du zinc. On peut encore utiliser des mélanges mixtes d'amines tertiaires et de composés organométalliques.

La couche adhésive utilisée selon l'invention peut encore contenir des additifs divers tels des agents anti-UV et anti-oxydants, des promoteurs ou des inhibiteurs d'adhésion, des tensio-actifs, des agents d'étalement, des anti-hydrolyse tels que des polycarbodiimides, etc. Ces additifs ne doivent pas influencer défavorablement d'autres propriétés de la couche adhésive; c'est pourquoi ils sont généralement utilisés en faible quantité, par exemple, pour l'agent anti-UV de 0,1 à 0,5% en poids par rapport au poids total du polyuréthane, et de 0,1 à 0,5 en poids d'antioxydant. On peut encore y ajouter des isocyanates de fonctionnalité supérieure à 2, par exemple un triisocyanate tel un biuret de 1,6-hexanediisocyanate de façon à obtenir une rétractation partielle ou plus importante de polyuréthane bloqué.

La couche adhésive est utilisée suivant l'invention pour la fabrication des stratifiés en verre, en matière plastique, tels le polycarbonate, les polyamides, les acryliques, les polyuréthanes, en métal tel l'acier inoxydable, l'aluminium, etc.

Par exemple, la couche adhésive est utilisée selon l'invention pour la fabrication d'un vitrage feuilleté formé de deux feuilles de verre entre les quelles est interposée la couche adhésive qui sous une épaisseur de l'ordre de 0,2 mm et plus éventuellement, peut remplir le rôle d'absorbeur d'énergie.

La couche adhésive peut encore être utilisée selon l'invention pour la fabrication d'un vitrage de sécurité formé d'un support monolithe ou feuilleté, en verre ou en matière plastique, sur lequel adhère par l'intermédiaire de la couche adhésive contenant le polyuréthane bloque, une couche antilacérante et autocicatrisable comme décrite précédemment.

La couche adhésive peut encore être utilisée selon l'invention pour l'assemblage d'une feuille de verre avec une feuille de polycarbonate. Un tel vitrage peut par exemple être utilisé comme vitrage pare-balle.

Les exemples ci-après illustrent l'invention:

Exemple 1
On prépare un polyuréthane bloqué avec un rapport NCO/OH de 1,5, par mélange d'un composant polyol formé à partir de 15,7 g (0.0149 mole) d'un ester commercialisé sous l'appellation OXYESTER T 1136 par la Société VEBA CHIMIE, 18,7 g (0,0149 mole) de polycaprolactone par exemple celle commercialisée sous l'appellation NIAX PCP 230 par la société UNION CARBIDE, 1,2 g (0,0011 mole) de polyester par exemple celui commercialisé sous l'appellation DESMOPHEN 1100 par la société BAYER, et 0,15 g (0,0018 mole) de 1,4-butanediol, que l'on déshydrate durant une heure à 120°C sous vide, auquel on ajoute un composante isocyanate formé de 39,4 g (0,147 mole) d'IPDI H 3150 commercialisé par la société HULS. Le mélange est agité pendant une heure à 60°C sous atmosphère d'azote.

On additionne ensuite 0,25% agent anti-oxydant (IRGANOX 1010) et 15% d'agent anti-UV (TINUVIN 770) qui sont commercialisés tous deux par la société CIBA GEIGT, à la température de 55°C. Au prépolymère formé, on ajoute, à 60°C, 20% en poids de méthyléthylcétone puis l'agent bloquant, soit 15,64 g (0,0977 mole) de malonate de diéthyle. On termine la réaction par addition de 7,7 g d'un agent d'allongement de chaine du type N-méthyldiéthanolamine et l'on suit par spectrographie la disparition de la bande NCO. On obtient une pate incolore.

On prépare une dispersion aqueuse du polyuréthane bloqué en ajoutant à la pâte préalablement préparée de l'eau désionisée tiède, acidifiée par de l'acide chlorhydrique. On obtient une dispersion aqueuse dont l'extrait sec est de 42% en poids.

4

On coule cette dispersion sur une couche préalablement formée de polyuréthane thermodurcissable comme décrit dans la publication de brevet français 2 398 606. L'étalement de la dispersion est très bon. On évapore l'eau par passage des couches dans un tunnel de chauffage. On constitue ainsi une feuille à deux couches, comprenant sur une de ses faces une couche antilacérante et autocicatrisable, formée essentiellement d'un polyuréthane thermodurcissable, alors que l'autre face est formée essentiellement d'un polyuréthane bloqué non collant dans des conditions normales de température. La couche formée de polyuréthane bloqué a environ 0,03 mm d'épaisseur.

Après avoir été retirée de son support, la feuille peut être manipulée aisément et stockée éventuellement.

On peut utiliser la feuille pour fabriquer un parebrise de sécurité par exemple.

Pour ce faire, on assemble la feuille avec un vitrage feuilleté classique formé de deux feuilles de verre et d'une couche intercalaire d'un absorbeur d'énergie tel un polyvinylbutyral. Pour obtenir une bonne adhésion de la feuille avec son support, on utilise la chaleur et la pression. En chauffant l'ensemble, on provoque le déblocage des fonctions isocyanates bloquées du polyuréthane qui peuvent alors former une liaison chimique avec le support.

Un procédé d'assemblage préféré consiste à former une liaison préliminaire de la feuille avec le support en faisant passer l'ensemble entre les rouleaux d'une calandreuse ou en utilisant une membrane élastique gonflable comme décrit dans la publication de brevet français 2 230 599.

La liaison définitive est assurée par un cycle d'autoclave comprenant une montée de la température jusqu'à 150°C, puis, tout en maintenant l'ensemble à cette température, une augmentation de la pression jusqu'à 10 bars, et un maintien de ces conditions pendant 30 minutes. Le cycle d'autoclave provoque le déblocage partiel ou total des fonctions isocyanates bloquées.

Le vitrage obtenu est exempt de défauts optiques tels que des bulles et montre une excellente transparence. L'adhésion obtenu est bonne et se conserve même dans des conditions rigoureuses. Ainsi, il ne se produit aucun décollement de la feuille lorsqu'on place le vitrage dans une atmosphère chaude à 95% d'humidité relative, et ce pendant 15 jours.

Exemple 2

On prépare un polyuréthane bloqué avec un rapport NCO/OH de 1,5 par un mélange polyol formé à partir de 28 g (0,0266 mole) d'un ester commercialisé sous l'appellation OXYESTER T 1136 par la société VEBA CHIMIE, 10,2 g (0,0122 mole) d'un polycaprolactone commercialisée sous l'appellation NIAX PCP 210 par la société UNION CARBIDE, 15,4 g (0,123 mole) d'une polycaprolactone commercialisée sous l'appellation NIAX PCP 230 par la société UNION CARBIDE, 26,7 g (0,0267 mole) d'un polyéther commercialisé sous l'appellation POLYMEG 1000 par la société QUAKER OATS, 3 g (0;0027 mole) d'un polyester commercialisé sous l'appellation DEMOSPHEN 1100 par la sociéte BAYER. Ce composant polyol es déshydraté sous vide durant une heure à 100°C. On ajoute sous azote le composant isocyanate, à 60°C sous agitation vigoureuse par addition de 67 g (0,25 mole) d'isophorone diisocyanate (IPDI H 3150 de la société HULS) puis 0,3% par rapport au poids du polyuréthane bloqué, le TINUVIN 770 et 0,5% d'IRGANOX et à nouveau 0,36 g (0,0013 mole) d'IPDI H 3150. La réaction est poursuivie pendant une heure à 60°C. A cette température, on introduit ensuite l'agent bloquant, soit 18,9 g (0,16 mole) d'ε-caprolactame qu'on laisse réagir pendant une heure, puis 11,4 g (0,085 mole) d'acide diméthylolpropionique. On suit par IR la disparition de la bande NCO due aux fonctions isocyanates libres.

La mise en solution se fait par addition d'eau désionisée tiède contenant 8,6 g d'Et₃N. On obtient une solution claire dont l'extrait sec est de 32%.

Cette solution est coulée comme dans l'exemple précédent sur une couche antilacérante et autocicatrisable préalablement formée pour former une couche souple, élastique, de bonne qualité optique.

La feuille fabriquée est utilisée comme feuille de protection dans un vitrage de sécurité. L'assemblage de la feuille et du support en verre s'effectue par calandrage suivi d'un cycle comme décrit dans l'exemple 1. Après déblocage partiel ou total des fonctions isocyanates on obient une bonne adhésion de la feuille avec le support en verre.

Exemple 3

On prépare un polyuréthane bloqué avec un rapport NCO/OH de 1,5 en prenant les mêmes précautions que dans les exemples précédents, par réaction de 74,9 g (0,279 mole) d'IPDI H 3150, 17,4 g (0,0165 mole) d'OXYESTER T 1136, 51,7 g (0,0413 mole) de NIAX PCP 230, 17,2 g (0,0207 mole) de NIAX PCP 210, 3 g (0;0027 mole) de DESMOPHEN 1100. Au prépolymère on ajoute 0,3% d'agent anti-UV, par exemple celui commercialisé sous l'appellation TINUVIN 770 et 0,5% d'agent anti-oxydant par exemple celui commercialisé sous l'appellation IRGANOX 1010 dissout dans le mimimum de méthyléthylcétone. On additionne ensuite 22 g (0,194 mole) d'ε-caprolactame comme agent bloquant, qu'on laisse réagir sur les fonctions isocyanates durant deux heures à 60°C. On achève la synthèse par addition de 12,3 (0,103 mole) de N-méthyldiéthanolamine comme agent d'allongement de chaine, qu'on laisse réagir à 60°C. On suit par infrarouge la disparition progressive de la bande isocyanate.

On forme une dispersion aqueuse par ajout d'eau désionisée contenant 3,8 d'acide chlorhydrique. On obtient après agitation vigoureuse une dispersion fine de polyuréthane. L'extrait sec de la dispersion est de 45%.

Cette dispersion est utilisée pour former une couche de colle comme décrit dans les exemples précédents. On fabrique un vitrage feuilleté comme dans les exemples précédents en provoquant le déblocage des fonctions isocyanates bloquées par action de la chaleur au moment de l'assemblage des éléments du vitrage feuilleté par passage dans un autoclave. Utilisé dans un vitrage feuilleté, cette colle montre des propriétés comparables à celles des colles décrites dans les exemples précédents.

Exemple 4

On introduit dans un réacteur 51,3 g (0,041 mole) de NIAX PCP 230, 38,2 g (0,0363 mole) d'OXYESTER T 1136, 3 g (0,0027 mole) de DESMOPHEN 1100 que l'on déshydrate à la pompe à palettes durant une heure à 100°C. On additionne ensuite à 60°C 67,5 g (0,251 mole) d'IPDI H 3150 qu'on laisse réagir pendant une heure. On ajoute ensuite 0,15% de TINUVIN 770 puis 0,25% d'IRGANOX 1010 dissous dans 5% de méthyléthylcétone. On ajoute 18,8 g (0,166 mole) d'ε-caprolactame, en tant qu'agent bloquant, à 45°C. La réaction est poursuivie durant 12 heures à température ambiante puis 1 heure à 50°C. On additionne ensuite 17,6 g (0,13 mole) d'acide diméthylpropionique à 60°C pendant 3 heures. On suit par infra-rouge la disparition progressive des fonctions isocyanates.

On forme une soluhpon de polyuréthane bloqué par ajout d'eau déionisée tiède contenant 8,6 g d'Et$_3$N en tant qu'agent de solubilité.

On forme une feuille à deux couches par coulée de la solution sur une couche antilacérante et autocicatrisable de polyuréthane thermodurcissable. On évapore l'eau. La couche adhésive a une épaisseur d'environ 0,03 mm.

La feuille est utilisée pour fabrique un vitrage feuilleté, comme décrit précédemment, le déblocage des fonctions isocyanates bloquées s'effectuant au moment de l'assemblage par passage dans un autoclave. La colle montre des propriétés semblables à celles des colles précédentes.

Exemple 5

On forme un polyuréthane bloqué thermoplastique avec un rapport NCH/OH=1,5 à partir des composants suivants, en prenant les mêmes précautions que celles décrites précédemment:

— 67,1 g (0,25 mole) d'IPDI H 3150
— 80,5 g (0,097 mole) de NIAX PCP 210
— 18,8 g (0,16 mole) d'ε-caprolactame
— 9,4 g (0,07 mole) d'acide diméthylol-propionique
— 7,8 g d'Et$_3$N

On obient une solution aqueuse à 35% d'extrait sec à laquelle on ajoute un agent réticulant comme un triol, un tétrol ou un héxol en large défaut par rapport aux fonctions isocyanates susceptibles d'être débloquées à raison de 0,5% en poids par rapport au polyuréthane final. On forme une couche adhésive comme décrit auparavant. Cette couche présente des propriétés semblables à celles des couches précédentes.

Exemple 6

On prépare un polyuréthane bloqué avec un rapport NCO/OH de 1,5 par mélange d'un composé polyol formé à partir de 17,45 g (0,0165 mole) d'un ester commercialisé sous l'appellation OXYESTER T 1136 part la société VEBA CHIMIE, 20,74 g (0,165 mole) de polycaprolactone par exemple celle commercialisée sous l'appellation NIAX PCP 230 par la société UNION CARBIDE, 1,35 g (0,0012 mole) de polyester, par exemple celui commercialisé sous l'appellation DESMOSPHEN 1100 par la société BAYER, et 0,16 g (0,0019 mole) de 1,4-butanediol, que l'on déshydrate durant une heure à 120°C sous vide, auquel on ajoute un composant isocyanate formé de 41,93 g (0,156 mole) d'IPDI H 3150. Le mélange est agité pendant une heure à 60°C sous atmosphère d'azote.

On additionne ensuite 0,25% d'agent anti-oxydant (IRGANOX 1010) et 0,15% d'agent anti UV (TINUVIN 770 de CIBA GEIGY) à la température de 55°C. Au prépolymère formé, on ajoute, à 60°C, 20% en poids de méthyléthylcétone puis l'agent bloquant, soit 13,5 g (0,1038 mole) d'acétoacétate d'éthyle à 60°C. On termine la réaction par addition de 8 g d'un agent d'allongement de chaine du type N-méthyldiéthanolamine et l'on suit par IR la disparition de la bande NCO. On obtient une pâte incolore.

On prépare une solution aqueuse du polyuréthane bloqué en ajoutant à la pâte préalablement préparée de l'eau déionisée tiède, acidifiée par de l'acide chlorhydrique. On obtient une dispersion aqueuse dont l'extrait sec est de 36% en poids.

On forme ensuite une feuille à deux couches par coulée de la dispersion sur une couche antilacérante et autocicatrisable de polyuréthane thermodurcissable. Après évaporation de l'eau, la couche adhésive a une épaisseur de 0,03 mm.

Utilisée pour fabrique un vitrage feuilleté, la colle montre des propriété semblables à celles des colles précédentes.

**0 032 329**

Exemple 7

On prépare de la façon suivante un polyuréthane bloqué dont le rapport numérique NCO/OH est de 1,5. On mélange 12,9 g (0,0129 mole) de FORMREZ ER 131 commercialisé sous cette appellation par la société WITCO CHEMICAL et 2,1 g (0,0016 mole) de DESMOPHEN 1300 (BAYER) soit 0,00161 mole que l'on déshydrate pendant une heure à 100°C sous le vide d'une pompe à palette.

On ajoute ensuite 14,4 g (0,0647 mole) d'IPDI, commercialisé sous cette appellation par la société HULS, l'ensemble est agité une heure à 60°C sous atmosphère d'azote.

Au prépolymère, on additionne 4,9 g (0,0433 mole) d'$\varepsilon$-caprolactame, puis après réaction, 3,7 g (0,0276 mole) d'acide diméthylolpropionique qui est un agent d'allongement de chaine. On suit par IR la disparition de la bande NCO.

La mise en solution s'effectue au moyen d'$H_2O$ désionisée tiède contenant 2,8 g d'$Et_3N$. On obtient après vive agitation une solution incolore de polyuréthane bloqué.

De même que dans les exemples précédents, on forme une feuille à deux couches qu'un utilise dans la fabrication d'un vitrage feuilleté. Le produit obtenu montre les mêmes qualités que les produits précédents.

Exemple 8

On prépare un polyuréthane dont le rapport numérique NCO/OH est égal à 1,5 par mélange dans un réacteur sous atmosphère d'azote de 532 g (0,532 mole), d'un diol commercialisé sous l'appellation FORMREZ ER 131 par la société WITCO CHEMICAL, de 11,6 g (0,141 mole), de 1,4-butanediol que l'on a déshydraté une heure à 100°C sous le vide réduit d'une pompe à palette auxquels on ajoute 556 g (2,504 moles) d'IPDI, commercialisé sous cette appellation par la société HULS, que l'on laisse réagir deux heures à 60°C, puis on effectue l'opération de blocage par emploi de 187,6 g d'$\varepsilon$-caprolactame; cette opération se fait pendant une heure à 70°C.

On termine la synthèse du polymère par addition à 65°C de 134,1 g d'acide diméthylolpropionique. On suit par IR la disparition progressive des fonctions isocyanates.

La mise en solution se fait par addition au polymère de 2,26 l d'eau désionisée tiède contenant 101 g d'$Et_3N$. On obtient après agitation vive une dispersion très fine de polyuréthane.

De même que dans les exemples précédents, on forme une feuille à deux couches qu'on utilise dans la fabrication d'un vitrage feuilleté. Le produit obtenu après autoclave montre les mêmes qualités que les produits précédents.

Exemple 9

On prépare un polyuréthane dont le rapport numérique NCO/OH est égal à 1,5 par mélange dans un réacteur de 13,4 g (0,0127 mole) d'OXYESTER T 1136, 12,9 g (0,0129 mole) de POLYMEG 1000, 18,2 g (0,0150 mole) de NIAX PCP 230, 1,6 g (0,0014 mole) de DESMOPHEN 1100, que l'on déshydrate pendant deux heures à 100°C sous le vide d'un pompe à palettes. On additionne ensuite 35,3 g (0,131 mole) d'IPDI H 3150 goutte à goutte puis le mélange est porté à 50°C sous atmosphère d'azote.

Au prépolymère, on additionne 2% en poids de méthyléthylcétone pour diminuer sa viscosité, puis 9,9 g (0,087 mole) d'$\varepsilon$-caprolactame comme agent bloquant.

La réaction de blocage réalisée à 60°C peut être accélérée en utilisant de 0,1 à 0,5% en poids de catalyseur et en élevant temporairement la température à 100°C.

On termine la synthèse du polyuréthane en additionnant 6 g (0,045 mole) d'acide diméthylolpropionique (DMP) à 60°C.

La mise en solution s'effectue au moyen d'eau désionisée tiède contenant 4,52 g d'$Et_3N$.

De même que dans les exemples précédents, on forme une feuille à deux couches qu'on utilise dans la fabrication d'un vitrage feuilleté. Le produit obtenu montre les qualités des produits précédents.

Exemple 10

Après avoir déshydraté les produits de départ à 90°C pendant deux heures sous un vide de 5 mm de mercure, on introduit dans un réacteur, sous atmosphère d'azote, 134 g (0,127 mole) d'OXYESTER T 1136 puis, goutte à goutte, 103 g (0,38 mole) d'IPDI H 3150. On porte le mélange à 60°C.

On effectue la réaction de blocage par addition de 29 g (0,256 mole) d'$\varepsilon$-caprolactame à 70°C pendant trois heures.

On termine la synthèse de polymère par addition de 16,5 g (0,123 mole) de DMP.

On ajoute de l'eau désionisée contenant 12,45 g d'$Et_3N$ et on obtient une dispersion fine de polyuréthane dont l'extrat sec est de 28% en poids.

De même que dans les exemples précédents, on forme une feuille à deux couches qu'on utilise dans la fabrication d'un vitrage feuilleté. Le produit obtenu montre les qualités des produits précédents.

Exemples 11 à 20

On utilise les dispersions aqueuses décrites dans les exemples précédents pour fabriquer des feuilles transparentes d'une épaisseur d'environ 0,5 mm. Le cas échéant, les feuilles peuvent être fabriquées par superposition de plusieurs couches coulées successives.

Ces feuilles sont utilisées comme absorbeur d'énergie dans les vitrages feuilletés.

7

**0 032 329**

Dans ce but, elles peuvent être placées entre deux feuilles rigides en verre ou en matière plastique. Associées à une couche antilacérante et autocicatrisable, pour former des feuilles composites, elles peuvent être assemblées à une feuille en verre unique pour former un vitrage feuilleté de sécurité à trois couches, à savoir une feuille de verre, une couche adhésive ayant des propriétés d'absorbeur d'énergie et une couche antilacérante et autocicatrisable.

La couche adhésive fournit une bonne adhésion entre les éléments des stratifiés qui peuvent être de nature très diverses, par exemple en verre, en matière plastique, tels le polycarbonate les polyamides, les acryliques, les polyuréthanes, en métal, tel l'acier ionoxydable, l'aluminium, etc.

L'adhérence obtenue peut être mesurée par un test de pelage décrit ci-dessous.

Pour effectuer ce test, on prépare d'abord des stratifiés comprenant un support de nature diverse par exemple en verre, en métal, en matière plastique sur lequel on place une feuille de matière plastique comprenant une couche formée essentiellement d'un polyuréthane thermodurcissable et une couche adhésive formée essentiellement d'un polyuréthane bloqué selon l'invention, cette dernière couche étant au contact du support. On soumet les stratifiés à une pression et à une température élevée, de l'ordre de 150°C, ce qui a pour effect de débloquer partiellement ou totalement le polyuréthane bloqué.

On découpe ensuite sur chaque stratifié une bande de 5 cm de large de la feuille de recouvrement: on décolle l'extrémité de la bande sur laquelle on applique une force de traction, perpendiculairement à la surface de l'éprouvette et avec une vitesse de traction de 5 cm par minute. L'opération est exécutée à 23°C. On note la force de traction moyenne nécessaire au décollement de la bande.

Suivant les composants utilisés pour former la couche adhésive, et la nature du support, on obtient des forces d'adhérence de l'ordre de 50 à 100 newtons et plus.

Le tableau suivant indique des valeurs d'adhérence mesurées par le test de pelage décrit précédemment. Ces mesures ont été exécutées sur les différents supports indiqués dans la première ligne, et revêtus de couches adhésives préparées selon les exemples indiqués dans la première colonne. Les forces d'adhérence sont exprimées en newtons.

| N° exemple \ support | Acier inox | Aluminium | Polycarbonate | Polyamide | Polyméthacrylate | Verre |
|---|---|---|---|---|---|---|
| Ex. 9 | >100 | >100 | 50 | — | — | >100 |
| Ex. 2 | >100 | >100 | — | 80 | — | >100 |
| Ex. 5 | — | >100 | 80 | 80 | 80 | >100 |
| Ex. 10 | >100 | >100 | 50 | 40 | 80 | 70 |
| Ex. 4 | >100 | >100 | >100 | 90 | 25 | >100 |

Ce tableau montre que les adhésions entre les éléments d'un stratifié obtenues par le procédé selon l'invention sont bonnes, souvent supérieures à 100 newtons, et cela pour des supports très divers.

La couche adhésive peut également être utilisée selon l'invention pour la fabrication des vitrages feuilletés sans que l'on provoque le déblocage des fonctions isocyanates bloquées. On a montré que la présence d'un agent bloquant dans la couche adhésive était bénéfique pour certaines propriétés de celle-ci, indépendamment du fait que l'on débloque ou pas les fonctions bloquées.

Ainsi, la présence d'agent bloquant améliore le pouvoir adhésif de la couche même sans procéder au déblocage ultérieur des fonctions bloquées.

**Revendications**

1. Utilisation d'une couche adhésive transparent pour la fabrication de vitrages feuilletés, caractérisée en ce qu'elle comprend essentiellement du polyuréthane bloqué formé à partir d'un composant polyol, d'un composant isocyanate, d'un agent d'allongement de chaines et d'un agent bloquant les fonctions isocyanates en excès, le nombre de groupements équivalents NCO dus au composant isocyanate étant supérieur au nombre de groupements équivalents hydrogènes actifs, tels les groupements hydroxyles provenant du composant polyol et de l'agent d'allongement de chaines, le polyuréthane bloqué étant susceptible d'être débloqué par action de la chaleur afin que les fonctions isocyanates libérées puissent réagir avec les éléments du vitrage à assembler se trouvant au contact de la couche adhésive, notamment avec le support de celle-ci.

2. Utilisation d'une couche adhésive selon la revendication 1, caractérisée en ce que le polyuréthane est dispersable ou soluble dans l'eau.

3. Utilisation d'une couche adhésive selon une des revendications 1 à 2, caractérisée en ce que le

8

rapport numérique des groupes NCO sur les groupes OH apportés par le composant polyol et l'agent d'allongement de chaines du polyuréthane bloqué est comprise entre 1,01 et 3.

4. Utilisation d'une couche adhésive selon la revendication 3, caractérisée en ce que le rapport numérique des groupes NCO sur les groupes OH est compris entre 1,01 et 1,5.

5. Utilisation d'une couche adhésive selon une des revendications 1 à 4, caractérisée en ce que le composant polyol est formé à partir de plusieurs polyols choisis parmi des polyesterpolyols, des polyétherpolyols, des polycaprolactones, des diols et des triols.

6. Utilisation d'une couche adhésive selon une des revendications 1 à 5, caractérisée en ce que le composant isocyanate est formé à partir d'au moins un isocyanate choisi parmi les isocyanates aliphatiques, cycloaliphatiques, aliphatiques aromatiques.

7. Utilisation d'une couche adhésive selon une des revendications 1 à 6, caractérisée en ce que le composant isocyanate contient des fonctions urées.

8. Utilisation d'une couche adhésive selon une des revendications 1 à 7, caractérisée en ce qu'elle contient un agent bloquant choisi notamment parmi les lactames, les dérivés, β-dicarbonylés, les mercaptans, les oximes, les phénols, les alcools.

9. Utilisation d'une couche adhésive selon une des revendications 1 à 8, caractérisée en ce que la couche adhésive contient des additifs tels des agents anti-UV, des anti-oxydants, des anti-hydrolyse, des agents d'étalement.

10. Utilisation d'une couche adhésive selon une des revendications 1 à 9, caractérisée en ce que le composant polyol est partiellement réticulé par des agents réticulants tels des alcools de fonctionnalité supérieure ou égale à 3, ou des amines de fonctionnalité supérieure ou égale à 3.

11. Utilisation d'une couche adhésive selon une des revendications 1 à 10, caractérisée en ce qu'elle contient un catalyseur de déblocage.

12. Utilisation d'une couche adhésive selon une des revendications 1 à 11, caractérisée en ce qu'elle est utilisée pour la liaison d'une couche de matière plastique antilacérante et autocicatrisable avec un support en verre ou en matière plastique monolithe ou feuilleté.

13. Utilisation d'une couche adhésive selon une des revendications 1 à 12, caractérisée en ce qu'elle présente, avec une épaisseur d'au moins 0,2 mm environ les propriétés d'un absorbeur d'énergie.

14. Vitrage feuilleté, notamment vitrage de véhicule de transport, de bâtiment, masque, écran, lentille, verre de lunettes, comprenant une couche adhésive telle que défine dans l'une des revendications 1 à 13.

15. Vitrage feuilleté selon la revendication 14, caractérisé en ce qu'il est soumis à un cycle d'autoclave qui provoque le déblocage partiel ou total du polyuréthane bloque.

## Patentansprüche

1. Verwendung einer transparenten Kleberschicht zur Herstellung von Verbundglasscheiben, dadurch gekennzeichnet, daß die Kleberschicht im wesentlichen aus einem blockierten Polyurethan besteht, das aus einer Polyolkomponente, einer Isocyanatkomponente, einem Kettenverlängerer und einem die im Überschuß vorhandenen Isocyanatgruppen blockierenden Mittel gebildet ist, wobei die Anzahl der NCO-Gruppen-Äquivalente der Isocyanat-Komponente größer ist also die Anzahl der aktiven Wasserstoff-Gruppen-Äquivalente, wie die Hydroxylgruppen der Polyolkomponente und des Kettenverlängerers, und wobei das blockierte Polyurethan durch Wärmeeinwirkung deblockiert werden kann, damit die freigesetzten Isocyanatgruppen mit den zusammenzufügenden Bestandteilen der Glasscheibe, insbesondere mit deren Trägerschicht, reagieren können, die sich in Kontakt mit der Kleberschicht befinden.

2. Verwendung einer Kleberschicht nach Anspruch 1, dadurch gekennzeichnet, daß das Polyurethan im Wasser dispersierbar oder löslich ist.

3. Verwendung einer Kleberschicht nach Anspruch 1 oder 2, dadurch gekennzeichnet, daß das Zahlenverhältnis der NCO-Gruppen zu den durch die Polyolkomponente und den Kettenverlängerer eingebrachten OH-Gruppen des blockierten Polyurethans zwischen 1,01 und 3 beträgt.

4. Verwendung einer Kleberschicht nach Anspruch 3, dadurch gekennzeichnet, daß das Zahlenverhältnis der NCO-Gruppen zu den OH-Gruppen zwischen 1,01 und 1,5 beträgt.

5. Verwendung einer Kleberschicht nach einem der Ansprüche 1 bis 4, dadurch gekennzeichnet, daß die Polyolkomponente aus mehreren Polyolen ausgewählt aus Polyesterpolyolen, Polyätherpolyolen, Polycaprolaktonen, Diolen und Triolen gebildet ist.

6. Verwendung einer Kleberschicht nach einem der Ansprüche 1 bis 5, dadurch gekennzeichnet, daß die Isocyanat-Komponente aus mindestens einem Isocyanat, ausgewählt aus aliphatischen, cycloaliphatischen, aliphatisch-aromatischen Isocyanaten gebildet ist.

7. Verwendung einer Kleberschicht nach einem der Ansprüche 1 bis 6, dadurch gekennzeichnet, daß die Isocyanat-Komponente Harnstoff-Gruppen enthält.

8. Verwendung einer Kleberschicht nach einem der Ansprüche 1 bis 7, dadurch gekennzeichnet, daß die Kleberschicht ein Blockiermittel enthält, welches insbesondere aus Laktamen, β-Dicarbonyl-Derivaten, Mercaptanen, Oximen, Phenolen und Alkoholen ausgewählt ist.

9. Verwendung einer Kleberschicht nach einem der Ansprüche 1 bis 8, dadurch gekennzeichnet, daß die Kleberschicht Additive enthält wie Anti-UV-Mittel, Anti-Oxidationsmittel, Anti-Hydrolysemittel sowie Verlaufsmittel.

10. Verwendung einer Kleberschicht nach einem der Ansprüche 1 bis 9, dadurch gekennzeichnet, daß die Polyolkomponente teilweise durch Vernetzungsmittel wie Alkohole mit 3 oder mehr funktionellen Gruppen oder Amine mit 3 oder mehr funktionellen Gruppen vernetzt ist.

11. Verwendung einer Kleberschicht nach einem der Ansprüche 1 bis 10, dadurch gekennzeichnet, daß die Kleberschicht einen Katalysator zum Deblockieren enthält.

12. Verwendung einer Kleberschicht nach einem der Ansprüche 1 bis 11, dadurch gekennzeichnet, daß die Kleberschicht für die Verbindung einer Splitterschutzschicht aus Kunststoff mit Selbstheileigenschaften mit einer Trägerschicht aus Glas oder aus einem monolithischem oder geschichteten Kunststoff verwendet wird.

13. Verwendung einer Kleberschicht nach einem der Ansprüche 1 bis 12, dadurch gekennzeichnet, daß die Kleberschicht mit einer Dicke von mindestens etwa 0,2 mm energieabsorbierende Eigenschaften besitzt.

14. Verbundglasscheibe, insbesondere Glasscheibe für Transportfahrzeuge, Gebäude, Blenden, Schirme, Linsen, Augengläser, enthaltend eine Kleberschicht gemäß einem der Ansprüche 1 bis 13.

15. Verbundglasscheibe nach Anspruch 14, dadurch gekennzeichnet, daß die Glasscheibe einer Autoklavbehandlung unterzogen ist, welche eine teilweise oder vollständige Deblockierung des blockierten Polyurethans bewirkt.

**Claims**

1. Use of an adhesive transparent layer for manufacture of laminated panes, characterised in that it comprises essentially a blocked polyurethane formed from a polyol component, an isocyanate component, a chain lengthening agent and an agent blocking the excess isocyanate functions, the number of equivalent NCO groups provided by the isocyanate component being greater than the number of equivalent active hydrogen groups, such as the hydroxyl groups provided by the polyol component and the chain lengthening agent, the blocked polyurethane being capable of being unblocked by the action of heat so that the freed isocyanate functions may react with the parts of the pane to be assembled in contact with the adhesive layer, such as the support for the latter.

2. Use of an adhesive layer according to claim 1, characterised in that the polyurethane is dispersible or soluble in water.

3. Use of an adhesive layer according to claim 1 or 2, characterised in that the ratio of the number of NCO groups to the number of OH groups provided by the polyol component and the chain lengthening agent of the blocked polyurethane chains is from 1.01 to 3.

4. Use of an adhesive layer according to claim 3, characterised in that the ratio of the number of NCO groups to the number of OH groups is from 1.01 to 1.5.

5. Use of an adhesive layer according to one of claims 1 to 4, characterised in that the polyol component is formed from a plurality of polyols selected from polyesterpolyols, polyetherpolyols, polycaprolactones, diols and triols.

6. Use of an adhesive layer according to one of claims 1 to 5, characterised in that the isocyanate component is formed from at least one isocyanate selected from aliphatic, cycloaliphatic and aliphatic-aromatic isocyanates.

7. Use of an adhesive layer according to one of claims 1 to 6, characterised in that the isocyanate component contains urea functions.

8. Use of an adhesive layer according to one of claims 1 to 7, characterised in that it contains a blocking agent selected from, for example, lactames, -dicarbonyl derivatives, mercaptans, oximes, phenols and alcohols.

9. Use of an adhesive layer according to one of claims 1 to 8, characterised in that the adhesive layer contains additives such as anti-U.V. agents, anti-oxidants, anti-hydrolysis agents and spreading agents.

10. Use of an adhesive layer according to one of claims 1 to 9, characterised in that the polyol component is partially cross-linked by cross-linking agents such as alcohols having a functionality of at least 3 and amines having a functionality of at least 3.

11. Use of an adhesive layer according to one of claims 1 to 10, characterised in that it contains a catalyst for un-blocking.

12. Use of an adhesive layer according to one of claims 1 to 11, characterised in that it is used for joining a layer of anti-laceration self-healing layer plastics material to a monolithic or laminated support of glass or plastics material.

13. Use of an adhesive layer according to one of claims 1 to 12, characterised in that it has the properties of an energy absorber with a thickness of at least about 0.2 mm.

14. A laminated pane, such as a pane for a vehicle, building, mask, screen, lens or prescription lens, comprising an adhesive layer as defined by any one of claims 1 to 13.

15. Laminated pane according to claim 14, characterised in that it is subjected to an autoclave cycle which causes partial or total unblocking of the blocked polyurethane.